# EUROPÄISCHE PATENTSCHRIFT

(11) **EP 1 046 744 B1**
(45) Veröffentlichungstag und Bekanntmachung des Hinweises auf die Patenterteilung: **11.08.2004**
(21) Anmeldenummer: 99105033.7
(22) Anmeldetag: 22.03.1999
(51) Int. Cl.: D21C 5/02, D21H 11/14

(54) **Verfahren zum Ablösen von Druckfarbe aus Altpapier**
Process for removing ink from recycled paper
Procédé pour séparer de l'encre de vieux papier

(43) Veröffentlichungstag der Anmeldung: 25.10.2000
(73) Patentinhaber: Kalkfabrik Netstal AG, 8754 Netstal (CH)
(72) Erfinder: Marti, Heinz, 8754 Netstal (CH); Höhener, Urs A., 8754 Netstal (CH); Sewing, Dirk, 8755 Ennenda (CH)
(74) Vertreter: Blum, Rudolf Emil Ernst

(56) Entgegenhaltungen:
- EP-A- 0 447 672
- WO-A-99/02770
- US-A- 5 362 362
- US-A- 5 837 098
- DATABASE WPI Section Ch, Week 9314 Derwent Publications Ltd., London, GB; Class A97, AN 93-113208 XP002105971 & JP 05 051888 A (SANYO KOKUSAKU PULP CO) , 2. März 1993
- DATABASE WPI Section Ch, Week 8129 Derwent PublicationsLtd.,London, GB; Class E37, AN 81-52380D & JP 56 063089 A (OJI PAPER CO) ,29. MAI 1991 XP002105970
- DATABASE WPI Section Ch, Week 9826 Derwent Publications Ltd., London, GB; Class A25, AN 98-292683 XP002105972 & JP 10 102390 A (KAO CORP) , 21. April 1998

## Beschreibung

Die vorliegende Erfindung betrifft ein Verfahren zum Ablösen von Druckfarbe und/oder anderen Verunreinigungen aus Altpapier oder Altpapiermischungen, sowie die aus diesem Verfahren erhaltenen, wiedergewonnenen Papierfasern. Ausserdem hat die vorliegende Erfindung die Verwendung von Kalk in einem Verfahren zum Ablösen von Druckfarbe und/ oder anderen Verunreinigungen aus Altpapier zum Gegenstand.

### Hintergrund der Erfindung

Mit dem wachsenden ökologischen Bewusstsein der modernen Industriegesellschaft hat das Rezyklieren von Altpapier in den vergangenen 20 Jahren eine immer grössere Bedeutung erlangt. Gegenwärtig wird in den meisten Ländern Europas im Mittel etwa 80% des Altpapiers rezykliert, d.h. es wird für die erneute Verwendung zurückgewonnen. Ein dabei auftretendes Problem ist das Herauslösen von Verunreinigungen aller Art aus dem Altpapier, insbesondere das Herauslösen von Druckfarbe. Um ein weitgehend weisses Papier zu erhalten muss das Altpapier daher im Rahmen seiner Wiedergewinnung einem sogenannten Deinking-Verfahren unterworfen werden.

Gemäss dem Stand der Technik wird dabei das Altpapier in einem Pulper aufgeschlämmt und zerkleinert, wobei die Papierfasern aufquellen. Die Faser-Suspension enthält in der Regel eine Reihe von Ablösehilfsmitteln, insbesondere von Tensiden und Bleichmitteln, und wird vorzugsweise auf einen pH von etwa 8-9 eingestellt. Als alkalisches Reagenz wird üblicherweise Natronlauge (Natriumhydroxid) verwendet, welche in Form einer gebrauchsfertig angelieferten Lösung zum Einsatz kommt. Die Faser-Suspension wird in mehreren Verfahrensschritten von groben Verunreinigungen (z.B. Heftklammern, Kunststoffresten etc.) gereinigt. Die Ablösung der Druckfarbe erfolgt in der Regel über eine Flotation. In einem weiteren Behandlungsschritt wird die vorgereinigte Papierfasersuspension (der deinkte Stoff) in einer geeigneten Vorrichtung eingedickt. Anschliessend erfolgt die Feinreinigung im sogenannten Dispergersystem mit darauffolgender erneuter Flotation, wobei wiederum eine Suspension erzeugt wird und wiederum mittels Natronlauge ein pH-Wert von etwa 8-9 eingestellt wird.

Aus JP-A-05 05 1888 ist ein De-inking Verfahren bekannt, in dem ein Pigment mit einer Öl-Absorpiton von mehr als 45 ml/g, z.B. CaCO₃, eingesetzt wird. Für die Zerlegung des Altpapiers wird u.a. Natronlauge eingesetzt.

Ein Nachteil der Natronlauge besteht zum einen in ihrem vergleichsweise hohen Anschaffungspreis. Dazu kommt, dass in Anbetracht des hohen Bedarfs an Alkalisierungsmittel, d.h. an Natronlauge-Lösung, von den Altpapierverwertern für einen permanenten Betrieb der Anlagen entsprechend hohe Mengen der fertigen Lösung herangeschafft werden müssen. Die besagte Heranschaffung ist allerdings insofern problematisch, als sie infolge ihres Gefahrenpotentials als Gefahrentransport zu deklarieren ist und damit mit einem gewissen Sicherheitsaufwand verbunden ist. Der vergleichsweise hohe logistische Aufwand bei der Beschaffung von Natronlauge-Lösung lässt sich zwar grundsätzlich durch Beschaffung von Natriumhydroxidplätzchen reduzieren, aber die Zubereitung der Natronlaugen Lösung vor Ort ist wegen der massiven Erwärmung und der anschliessend erforderlichen Abkühlung zeitaufwendig und ebenfalls mit einem relativ unangenehmen Gefahrenpotential verbunden. Folglich wird von den Altpapierverwertern die Beschaffung der fertigen Natronlaugen-Lösung bevorzugt.

JP-A-56 063089 offenbart ein Verfahren, in dem die Natronlauge aus Ca(OH)₂ und/oder CaO und Na₂CO₃ unter Bildung von CaCO₃ als Nebenprodukt erzeugt wird.

Obwohl die herkömmlichen Papierwiederverwertungs-Verfahren unter Verwendung von Natronlauge als Alkalisierungsreagenz in bezug auf die Wiedergewinnung von Altpapier durchaus erfolgreich sind, ist aber gerade die Beschaffung und Verwendung von Natronlauge als Alkalisierungsmittel im Rahmen der Durchführung des herkömmlichen Verfahrens recht problematisch und kostenintensiv.

Eine Aufgabe der vorliegenden Erfindung besteht folglich darin, ein Verfahren zum Ablösen von Druckfarbe und/ oder anderen Verunreinigungen aus Altpapier oder Altpapiermischungen bereitzustellen, welches die oben genannten Nachteile zumindest teilweise vermeidet. Eine weitere Aufgabe der vorliegenden Erfindung ist es, eine neuartige Verwendung für Kalk bereitzustellen.

Es ist insbesondere eine Aufgabe der vorliegenden Erfindung, ein rationelles, ökologisches und bezüglich der Bereitstellung und Verwendung des Alkalisierungsmittels unproblematisches sowie kostengünstiges Verfahren zum Ablösen von Druckfarbe und/ oder anderen Verunreinigungen aus Altpapier oder Altpapiermischungen bereitzustellen.

Diese Ziele werden erfindungsgemäss gemäss den unabhängigen Ansprüchen erreicht. Die bevorzugten Ausführungsformen sind in den abhängigen Ansprüchen aufgeführt.

### Beschreibung der Erfindung

Völlig überraschend ist jetzt gefunden worden, dass bei der Verwendung von Kalk, der gelöschten Kalk und/oder gebrannten Kalk enthält oder daraus besteht, als Alkalisierungsmittel die oben genannten Ziele erreicht werden können ohne dass die Qualität der wiedergewonnenen Papierfasern beeinträchtigt wird.

Dementsprechend umfasst die vorliegende Erfindung ein Verfahren aus mindestens einem Vorgang zum Ablösen von Druckfarbe und/ oder anderen Verunreinigungen aus Altpapier oder Altpapiermischungen, wobei jeweils eine wässrige, Tenside enthaltende Altpapiersuspension bereitgestellt wird und wobei zur Einstellung eines pH-Werts von mindestens 8 ein alkalisches Reagenz enthaltend oder bestehend aus Kalk zugegeben wird.

Das erfindungsgemässe Verfahren kann dabei im Rahmen eines einzigen Ablösevorgangs durchgeführt werden oder aber es kann auch zwei Ablösevorgänge, d.h. einen einleitenden Vorreinigungsvorgang und einen anschliessenden Feinreinigungsvorgang umfassen, wobei jeweils mittels eines Kalkprodukts ein pH-Wert von mindestens 8 eingestellt wird. Im Vorreinigungsvorgang wird der Grossteil der Verunreinigungen (z.B. Druckfarbe) in einer Flotation mit alkalischem Milieu herausgelöst Auch bei der Feinreinigung und einer allfälligen Bleiche wird wiederum eine Chemikalienkombination bereitgestellt, in welcher erfindungsgemäss ein Kalkprodukt als Alkalisierungsmittel verwendet wird.

Der dabei als Alkalisierungsreagenz verwendete Kalk enthält gelöschten Kalk ("Kalkhydrat", Calciumhydroxid, Ca(OH)₂)und/oder gebrannten Kalk (Calciumoxid, CaO) oder besteht daraus. Der Kalk kann in fester Form zur Einstellung des pH in der Chemikalienkombination eingesetzt werden. In einer bevorzugten Ausführungsform kommt der Kalk aber als wässrige Suspension (Kalkmilch) zum Einsatz.

Allgemein muss für die Durchführung des erfindungsgemässen Verfahrens soviel Kalkprodukt eingesetzt werden um in der Suspension den erwünschten pH von mindestens 8 einzustellen. Erfahrungsgemäss werden zur Einstellung eines pH-Werts von mindestens 8 etwa 0,05 bis 1,5 Gew.-%, vorzugsweise 0,2 bis 1 Gew.-% und ganz besonders bevorzugt von 0,3 bis 0,6 Gew.-% eines Kalkproduktes, vorzugsweise von Calciumhydroxid bezogen auf die Papiertrockenmenge verwendet.

Die hervorragende Verwendbarkeit von Kalk als Alkalisierungsmittel bei der Papierwiedergewinnung ist insofern völlig überraschend, als die Fachwelt bis anhin davon ausgegangen ist, dass der Kalk insbesondere gegenüber den im Auflösungsbad in der Regel ebenfalls anwesenden Tensiden unverträglich sein würde. Wie beim Fachmann allgemein bekannt, tendieren calciumhaltige Verbindungen wie Kalk in der Regel zum Ausfällen mit Tensiden, was z.B. bei den Waschmitteln durch eine intensive Verwendung von Calcium-Fängern (z.B. Polyphosphate bzw. Zeolithe) umgangen wird, um das Waschwasser zu enthärten. Bei der Papierwiedergewinnung sind aber Calciumcarbonat-Ausfällungen ausgesprochen unerwünscht, weil die Ausfällungen an verschiedenen Stelen zu Ablagerungen und Verkrustungen führen. Um so überraschender ist die erfindungsgemäss ausgenutzte Erkenntnis, dass Kalk als Alkalisierungsmittel bei der Altpapier-Wiedergewinnung durchaus verwendet werden kann, ohne dass es zu übermässigen Calciumcarbonat-Ausfällungen und zu Verkrustungen kommt.

Die Verwendung von Kalk als Alkalisierungsmittel gegenüber der herkömmlichen Natronlauge hat insbesondere den Vorteil, kostengünstiger zu sein (ungefähr halb so teuer), es ist als Feststoff ungefährlicher am Einsatzort der Papierwiedergewinnung zur Zubereitung einer Suspension einsetzbar, es ist insgesamt weniger gefährlich zu handhaben und schliesslich auch ökologischer als die Natronlauge. Rein chemisch gesehen, hat Kalk auch noch den Vorteil einen Pufferbereich zwischen pH 7-9 zu ermöglichen, was mit der Natronlauge nicht möglich ist, so dass der pH-Wert in der Suspension stabiler eingestellt werden kann.

In einer bevorzugten Ausführungsform können im Rahmen des erfindungsgemässen Papierwiedergewinnungs-Verfahrens ausserdem noch Zusatzstoffe ausgewählt aus der Gruppe umfassend Natronwasserglas, Bleichmittel, optische Aufheller in der Suspension bzw. im Dispergiersystem verwendet werden.

Die Zerkleinerung und Quellung des Altpapiers im Pulper wird über einen angemessenen Zeitraum, d.h. mindestens etwa 10 Minuten, bei etwa 40-45°C durchgeführt. Nach der Zerkleinerung und Quellung gelangt die Altpapieraufschlämmung in eine mehrstufige Reinigung, z.B. bestehend aus Fiberizer, unterschiedlichen Siebsystemen, Flotation etc..

Die aus dem Altpapier hergestellte, d.h. gereinigte Papierfasersuspension (deinkter Stoff) wird anschliessend im Rahmen eines bevorzugt durchgeführten zweiten Verfahrensschrittes in einer geeigneten Vorrichtung eingedickt. Nach der Eindickung wird der deinkte Stoff im sogenannten Dispergersystem unter Zusatz von dem Fachmann bekannten Chemikalien gebleicht. Diese Chemikalien können Bleichmittel wie z.B. Wasserstoffperoxid sein. Der pH-Wert wird wiederum erfindungsgemäss mit einem Kalkprodukt auf einen Wert von mindestens 8 angehoben.

Ein weiterer Gegenstand der vorliegenden Erfindung ist der wiedergewonnene Altpapierstoff, welcher gemäss dem erfindungsgemässen Verfahren, d.h. unter Verwendung von Kalk als Alkalisierungsmittel, erhältlich ist.

Ein letzter Aspekt der vorliegenden Erfindung ist die Verwendung von Kalk zum Ablösen von Druckfarbe und/ oder anderen Verunreinigungen aus Altpapier oder Altpapiermischungen in einem Verfahren in welchem Kalk als Alkalisierungsmittel verwendet wird.

## Patentansprüche

1. Verfahren zum Ablösen von Druckfarbe und/oder anderen Verunreinigungen aus Altpapier oder Altpapiermischungen, wobei eine wässrige, Tenside enthaltende Altpapiersuspension bereitgestellt wird, die durch Zugabe eines alkalischen Reagenz auf einem pH-Wert von mindestens 8 eingestellt wird, **dadurch gekennzeichnet, dass** das alkalische Reagenz ein Kalkprodukt ist, wobei das Kalkprodukt gelöschten und/oder gebrannten Kalk in fester Form oder als wässrige Suspension enthält oder daraus besteht.

2. Verfahren nach Anspruch 1, **dadurch gekennzeichnet, dass** das alkalische Reagenz gelöschten und/oder gebrannten Kalk in fester Form enthält oder daraus besteht.

3. Verfahren nach Anspruch 1, **dadurch gekennzeichnet, dass** als alkalisches Reagenz eine wässrige Suspension (Kalkmilch) verwendet wird.

4. Verfahren nach einem der vorhergehenden Ansprüche, **dadurch gekennzeichnet, dass** zur Einstellung eines pH-Werts von mindestens 8 etwa 0,05 bis 1,5 Gew.-%, eines Kalkproduktes verwendet werden.

5. Verfahren nach einem der vorangehenden Ansprüche, **dadurch gekennzeichnet, dass** zur Einstellung eines pH-Wertes von mindestens 8 0.2 bis 1 Gew.-% eines Kalkproduktes verwendet werden.

6. Verfahren nach einem der vorangehenden Ansprüche, **dadurch gekennzeichnet, dass** zur Einstellung eines pH-Wertes von mindestens 8 0.3 bis 0.6 Gew.-% eines Kalkproduktes verwendet werden.

7. Verfahren nach einem der vorangehenden Ansprüche, **dadurch gekennzeichnet, dass** zur Einstellung eines pH-Wertes von mindestens 8 Calciumhydroxid verwendet wird.

8. Verfahren nach einem der vorhergehenden Ansprüche, **dadurch gekennzeichnet, dass** ausserdem noch Zusatzstoffe ausgewählt aus der Gruppe umfassend Natronwasserglas, Bleichmittel, optische Aufheller in der Suspension verwendet werden.

9. Wiedergewonnener Altpapierstoff erhältlich nach dem Verfahren gemäss einem der Ansprüche 1 bis 8.

10. Verwendung von gelöschtem und/oder gebranntem Kalk zum Ablösen von Druckfarbe und/ oder anderen Verunreinigungen aus Altpapier oder Altpapiermischungen in einem Verfahren nach einem der Ansprüche 1 bis 8.

## Claims

1. Method for separating ink and/or other foreign matter from waste paper or mixtures of waste paper, wherein an aqueous, tensides comprising suspension of waste paper is provided that is adjusted to a pH of at least 8 by the addition of an alkaline reagent, **characterised in that** the alkaline reagent is a lime product, whereby the lime product contains or consists of slaked lime and/or caustic lime in solid form or as an aqueous suspension.

2. The method of claim 1, **characterised in that** the.alkaline reagent contains or consists of slaked lime and/or caustic lime in solid form.

3. The method of claim 1, **characterised in that** an aqueous suspension (lime water/milk of lime) is used as alkaline reagent.

4. The method of anyone of the preceding claims, **characterised in that** about 0,05 to 1,5 % by weight of a lime product are used for setting a pH value of at least 8.

5. The method of anyone of the preceding claims, **characterised in that** 0.2 to 1 % by weight of a lime product are used for setting a pH value of at least 8.

6. The method of anyone of the preceding claims, **characterised in that** 0.3 to 0.6 % by weight of a lime product are used for setting a pH value of at least 8.

7. The method of anyone of the preceding claims, **characterised in that** calcium hydroxide is used for setting a pH value of at least 8.

8. The method of anyone of the preceding claims, **characterised in that** furthermore additives selected from the group comprising sodium water glass, bleaching agents, optical brighteners are used in the suspension.

9. Recovered waste paper material obtainable by the method of anyone of claims 1 to 8.

10. Use of slaked lime and/or caustic lime for removing ink and/or other foreign matter from waste paper or mixtures of waste paper in a method of anyone of claims 1 to 8.

## Revendications

1. Procédé pour détacher de l'encre d'imprimerie et/ou d'autres souillures du vieux papier ou de mélanges de vieux papiers, dans lequel on prépare une suspension aqueuse de vieux papier contenant un agent tensioactif dont on règle le pH à au moins 8 par addition d'un réactif alcalin, **caractérisé en ce que** le réactif alcalin est un produit calcaire, le produit calcaire contenant de la chaux éteinte et/ou de la chaux vive sous forme solide ou sous la forme d'une suspension aqueuse ou en étant constitué.

2. Procédé suivant la revendication 1, **caractérisé en ce que** le réactif alcalin contient de la chaux éteinte et/ou de la chaux vive sous forme solide ou en est constitué.

3. Procédé suivant la revendication 1, **caractérisé en ce qu'**on utilise comme réactif alcalin une suspension aqueuse (lait de chaux).

4. Procédé suivant l'une des revendications précédentes, **caractérisé en ce que** l'on utilise, pour établir une valeur de pH d'au moins 8, environ de 0,05 à 1,5 % en poids d'un produit calcaire.

5. Procédé suivant l'une des revendications précédentes, **caractérisé en ce qu'**on utilise, pour établir une valeur de pH d'au moins 8, de 0,2 à 1 % en poids d'un produit calcaire.

6. Produit suivant l'une des revendications précédentes, **caractérisé en ce qu'**on utilise, pour établir une valeur de pH d'au moins 8, de 0,3 à 0,6 % en poids d'un produit calcaire.

7. Produit suivant l'une des revendications précédentes, **caractérisé en ce qu'**on utilise, pour établir une valeur de pH d'au moins 8, de l'hydroxyde de calcium.

8. Procédé suivant l'une des revendications précédentes, **caractérisé en ce que** l'on utilise, en outre, des additifs choisis dans le groupe comprenant du silicate de soude, un agent décolorant, un azurant optique en suspension.

9. Matière récupérée de vieux papier que l'on peut obtenir par le procédé suivant l'une des revendications 1 à 8.

10. Utilisation de chaux éteinte et/ou de chaux vive pour détacher des encres d'imprimerie et/ou d'autres souillures de vieux papier ou de mélanges de vieux papier dans un procédé suivant l'une des revendications 1 à 8.
